# NOUVEAU FASCICULE DE BREVET EUROPEEN

(11) **EP 2 736 708 B2**
(45) Date de publication et mention de la décision concernant l'opposition: **17.06.2020**
(45) Mention de la délivrance du brevet: 09.09.2015
(21) Numéro de dépôt: 12735303.5
(22) Date de dépôt: 16.07.2012
(51) Int. Cl.: B29C 73/16, B60C 19/12

(54) **COMPOSITION D'ELASTOMERE POUR OBJET PNEUMATIQUE, A PROPRIETE AUTO-OBTURANTE**
SELBSTDICHTENDE ELASTOMERZUSAMMENSETZUNG FÜR EIN DRUCKLUFTOBJEKT
SELF-SEALING ELASTOMER COMPOSITION FOR A PNEUMATIC OBJECT

(30) Priorité: 29.07.2011 FR 1156953
(43) Date de publication de la demande: 04.06.2014
(73) Titulaire: Compagnie Générale des Etablissements Michelin, 63000 Clermont-Ferrand (FR)
(72) Inventeur: VOGE, Bozena, F-63040 Clermont-Ferrand Cedex 9 (FR); MERINO LOPEZ, Jose, F-63040 Clermont-Ferrand Cedex 9 (FR); PELISSIER, Vincent, F-63040 Clermont-Ferrand Cedex 9 (FR)
(74) Mandataire: Wroblewski, Nicolas Paul André
(86) Numéro de dépôt international: PCT/EP2012/063877
(87) Numéro de publication internationale: WO 2013/017398

(56) Documents cités:
- WO-A1-2009/143895
- WO-A1-2009/143895
- FR-A1- 2 949 998
- FR-A1- 2 955 587

## Description

La présente invention est relative aux compositions à propriété auto-obturante (*self-sealing compositions*) et à leur utilisation comme couches anti-crevaison dans tout type d'objet « pneumatique », c'est-à-dire, par définition, tout objet qui prend sa forme utilisable quand on le gonfle d'air.

Elle se rapporte plus particulièrement à l'utilisation de telles compositions dans des objets pneumatiques, notamment dans des bandages pneumatiques, pour obturer d'éventuels trous dus à des perforations en service.

Depuis quelques années, en particulier, les manufacturiers de bandages pneumatiques consentent des efforts particulièrement importants afin de développer des solutions originales à un problème datant du début même de l'utilisation des roues chaussées de bandages pneumatiques de type gonflés, à savoir comment permettre au véhicule de poursuivre sa route malgré une perte importante ou totale de pression d'un ou plusieurs bandages pneumatiques. Pendant des décennies, la roue de secours fut considérée comme la solution unique et universelle. Puis, plus récemment, les avantages considérables liés à sa suppression éventuelle sont apparus. Le concept de "mobilité étendue" se développe. Les techniques associées permettent de rouler avec le même bandage pneumatique, en fonction de certaines limites à respecter, après une crevaison ou une chute de pression. Cela permet par exemple de se rendre à un point de dépannage sans devoir s'arrêter, dans des circonstances souvent hasardeuses, pour installer la roue de secours.

Des compositions auto-obturantes susceptibles de permettre d'atteindre un tel objectif, par définition aptes à assurer automatiquement, c'est-à-dire sans aucune intervention externe, l'étanchéité d'un bandage pneumatique en cas de perforation de ce dernier par un corps étranger tel qu'un clou, sont particulièrement difficiles à mettre au point.

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des bandages pneumatiques. Elle doit être capable d'obturer le trou lorsque l'objet perforant reste en place ; à l'expulsion de ce dernier, elle doit pouvoir combler le trou et rendre le bandage pneumatique étanche.

De nombreuses solutions ont été imaginées mais n'ont pas pu vraiment se développer dans les bandages pneumatiques pour véhicules, notamment par manque de stabilité dans le temps ou d'efficacité dans des conditions extrêmes de température d'utilisation, ou encore en raison de difficultés de fabrication et/ou d'utilisation de ces compositions auto-obturantes.

Ainsi, pour contribuer à maintenir une bonne efficacité à haute température, le document US-A-4 113 799 (ou FR-A-2 318 042) a proposé comme couche auto-obturante une composition comportant une combinaison de caoutchoucs butyls de haute et basse masses moléculaires réticulés partiellement, en présence éventuellement d'une faible part d'élastomère thermoplastique styrénique.

Le document US-A-4 228 839 a proposé comme couche auto-obturante pour pneumatique un mélange de caoutchouc contenant une première matière polymère qui se dégrade par irradiation, telle que du polyisobutylène, et une seconde matière polymère qui se réticule par irradiation, préférentiellement un caoutchouc butyl.

Le document US-A-4 426 468 a lui aussi proposé une composition auto-obturante pour pneumatique à base de caoutchouc butyl à très haute masse moléculaire, réticulé.

Un inconvénient connu des caoutchoucs butyls est qu'ils présentent des pertes hystérétiques importantes (soit un niveau élevé de tan δ) sur un spectre large de température, inconvénient qui se répercute sur les compositions auto-obturantes elles-mêmes avec une forte augmentation de l'hystérèse et une pénalisation notable de la résistance au roulement des bandages pneumatiques.

Des compositions auto-obturantes à base d'élastomère diénique insaturé (caoutchouc naturel) ont également été décrites, pour le même type d'application, en particulier dans les brevets US-A-4 913 209, US-A-5 085 942 et US-A-5 295 525.

Ces compositions se caractérisant par la présence combinée d'un taux élevé de résine hydrocarbonée à titre d'agent tackifiant (*"tackifier"*), toujours supérieur à 100 parties en poids pour cent parties d'élastomère solide, et d'une quantité importante d'élastomère (isoprène) à l'état liquide. Or, un taux aussi élevé de résine, outre le fait que son incorporation nécessite un malaxage très long de la matrice élastomérique, peut être également préjudiciable à l'hystérèse et en conséquence à la résistance au roulement des bandages pneumatiques. En outre, une quantité importante d'élastomère liquide donne une fluidité élevée à la composition qui est source d'autres inconvénients, notamment d'un risque de fluage de la composition auto-obturante lors d'une utilisation à température relativement élevée (typiquement supérieure à 60°C) fréquemment rencontrée lors de l'utilisation de certains bandages pneumatiques.

Par ailleurs, les documents WO2010/009849 et WO2010/012413 des Demanderesses décrivent une composition auto-obturante comprenant du caoutchouc naturel (NR), une résine hydrocarbonée, un très faible taux de noir de carbone et éventuellement un plastifiant liquide.

Une autre composition d'élastomère à propriété auto-obturante est proposée par le document FR-A-2 949 998. Cette composition de la couche auto-obturante comporte au moins (pce signifiant parties en poids pour cent parties d'élastomère solide) : 15 (a) à titre d'élastomère majoritaire, un élastomère diénique insaturé (choisi dans le groupe constitue par les polybutadiènes, le caoutchouc naturel, les polyisoprènes de synthèse, les copolymères de butadiènes, les copolymères d'isoprène et les mélanges de tels élastomères) ; (b) entre 30 et 90 pce d'une résine hydrocarbonée; (c) un plastifiant liquide dont la Tg (température de transition vitreuse) est inférieure à -20°C, à un taux pondéral compris entre 0 et 60 pce ; et (d) de 0 a moins de 30 pce d'une charge.

Poursuivant leurs recherches, les Demanderesses ont découvert une composition à propriété auto-obturante nouvelle qui ne nécessite pas de caoutchouc butyl, ni de quantités importantes de résine hydrocarbonée et d'élastomère liquide. Cette composition présente dans un objet pneumatique une performance anti-crevaison améliorée, notamment à basse température, par rapport aux compositions auto-obturantes de l'art antérieur.

En conséquence, selon un premier objet, la présente invention concerne une composition d'élastomère à propriété auto-obturante, utilisable notamment comme couche anti-crevaison dans un objet pneumatique, ladite composition étant à base d'au moins (pce signifiant parties en poids pour cent parties d'élastomère solide) :
- un coupage d'au moins deux élastomère solides, un élastomère polybutadiène ou copolymère de butadiène, dit "élastomère A", et un élastomère caoutchouc naturel ou polyisoprène de synthèse, dit "élastomère B", le rapport pondéral élastomère A : élastomère B étant compris dans un domaine de 10:90 à 90:10 ;
- entre 30 et 90 pce d'une résine hydrocarbonée ;
- 0 à moins de 100 pce de charge, dont 0 à moins de 10 pce de charge renforçante,
dans laquelle la résine hydrocarbonée présente une température de transition vitreuse (Tg) supérieure à 0°C

Selon un deuxième objet, la présente invention concerne une composition d'élastomère à propriété auto-obturante, utilisable notamment comme couche anti-crevaison dans un objet pneumatique, à base d'au moins, pce signifiant parties en poids pour cent parties d'élastomère solide :
- un coupage d'au moins deux élastomère solides, un élastomère polybutadiène ou copolymère de butadiène, dit "élastomère A", et un élastomère caoutchouc naturel ou polyisoprène de synthèse, dit "élastomère B", le rapport pondéral élastomère A : élastomère B étant compris dans un domaine de 10:90 à 90:10 ;
- entre 30 et 90 pce d'une résine hydrocarbonée ;
- de 30 à moins de 120 pce de charge, dont 0 à moins de 30 pce de charge renforçante,
dans laquelle la résine hydrocarbonée présente une température de transition vitreuse (Tg) supérieure à 0°C.

Selon un autre objet, la présente invention concerne un objet pneumatique, à l'état cru (i.e., non réticulé) comme à l'état cuit (i.e., réticulé ou vulcanisé), pourvu d'une couche anti-crevaison comprenant une composition selon l'invention.

De préférence, l'objet pneumatique de l'invention, notamment un bandage pneumatique, comporte également une couche étanche à l'air qui, associée à la couche anti-crevaison ci-dessus, constitue un stratifié étanche à l'air et anti-crevaison particulièrement avantageux lorsque ledit stratifié est disposé par exemple sur la paroi interne dudit objet ou bandage pneumatique.

La présente invention concerne particulièrement les bandages pneumatiques destinés à équiper des véhicules à moteur de type tourisme ou grand tourisme, SUV (*Sport Utility Vehicles*), deux roues (notamment motos, vélos), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

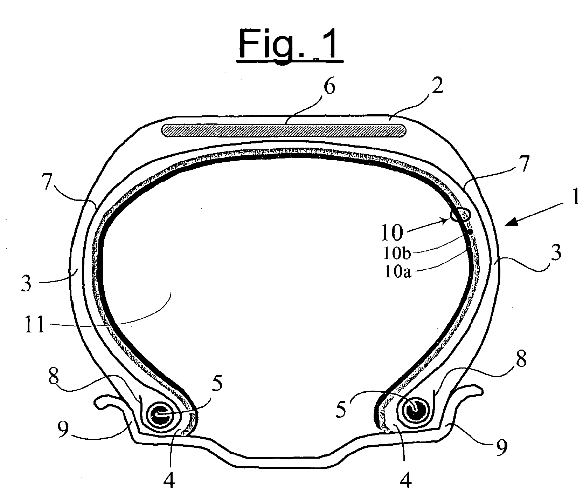

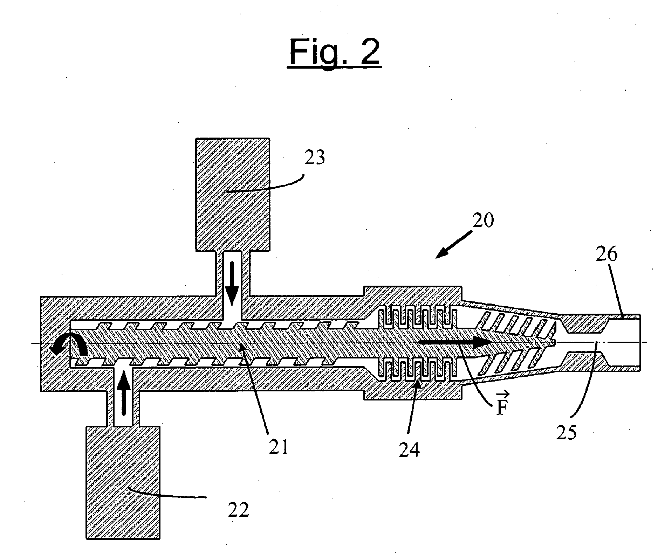

L'invention ainsi que ses avantages seront aisément compris à la lumière de la description et des exemples de réalisation qui suivent, ainsi que des figures 1 et 2 relatives à ces exemples qui schématisent de manière simple, sans respect d'une échelle spécifique :
- en coupe radiale, un exemple de bandage pneumatique utilisant une composition à propriété auto-obturante conforme à l'invention (Fig. 1) ;
- un exemple de dispositif d'extrusion-mélangeage utilisable pour la fabrication d'une composition conforme à l'invention (Fig. 2).

### I. DESCRIPTION DETAILLEE DE L'INVENTION

### I-1. Définitions

Dans la présente description, sauf indication expresse différente, tous les pourcentages (%) indiqués sont des % en masse.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" (en anglais *"phr"*) signifie parties en poids pour cent parties d'élastomère à l'état solide (du total des élastomères solides si plusieurs élastomères solides sont présents).

Par l'expression composition "à base de", il faut entendre de manière générale une composition comportant le mélange et/ou le produit de réaction de ses différents composants, certains de ces composants pouvant être susceptibles de (voire destinés à) réagir entre eux, au moins en partie, lors des différentes phases de fabrication de la composition, par exemple au cours de son éventuelle réticulation ou vulcanisation (cuisson) finale.

Par élastomère (ou "caoutchouc", les deux étant considérés comme synonymes) du type "diénique", doit être compris, de manière connue, un élastomère issu au moins en partie (i.e., un homopolymère ou un copolymère) de monomères diènes (i.e., de monomères porteurs de deux doubles liaisons carbone-carbone, qu'elles soient conjuguées ou non).

Ces élastomères diéniques peuvent être classés dans deux catégories, saturés ou insaturés. On entend dans la présente demande par élastomère diénique "insaturé" un élastomère diénique issu au moins en partie de monomères diènes conjugués et ayant un taux de motifs ou unités issus de diènes conjugués qui est supérieur à 30% (% en moles). C'est ainsi que sont exclus, de la définition précédente, des élastomères diéniques tels que les caoutchoucs butyl ou les copolymères de diènes et d'alpha-oléfines type EPDM qui peuvent être qualifiés d'élastomères diéniques "saturés" en raison de leur taux réduit de motifs d'origine diénique (toujours inférieur à 15% en moles). Les élastomères diéniques du type insaturés les plus courants sont ceux choisis dans le groupe constitué par les polybutadiènes, le caoutchouc naturel, les polyisoprènes de synthèse, les copolymères de butadiènes, les copolymères d'isoprène et les mélanges de tels élastomères.

### I-2. Mesures

### I-2-A. Viscosité Mooney

La viscosité ou plasticité Mooney caractérise de manière connue des substances solides. On utilise un consistomètre oscillant tel que décrit dans la norme ASTM D1646 (1999). La mesure de plasticité Mooney se fait selon le principe suivant : l'échantillon analysé à l'état cru (i.e., avant cuisson) est moulé (mis en forme) dans une enceinte cylindrique chauffée à une température donnée (par exemple 35°C ou 100°C). Après une minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton.mètre).

### I-2-B. Viscosité Brookfield

La viscosité Brookfield caractérise de manière connue des substances liquides. La viscosité apparente selon le procédé Brookfield est mesurée à une température donnée (par exemple à 65°C) selon la norme européenne et internationale EN ISO 2555 (1999). On utilise par exemple un viscosimètre du type A (par exemple modèle RVT) ou du type B (par exemple modèle HAT) à une fréquence de rotation préférentiellement égale à 10 ou 20 min⁻¹, avec un N° du mobile (1 à 7) adapté au domaine de viscosité mesurée (selon Annexe A de la norme EN ISO 2555).

### I-2-C. Macrostructure des élastomères

La macrostructure (Mw, Mn et Ip) et la distribution des masses molaires d'un élastomère, qu'il soit à l'état liquide ou solide, sont des caractéristiques connues de l'homme du métier, disponibles notamment auprès des fournisseurs d'élastomères, mesurables par ailleurs par des techniques conventionnelles telles que GPC (*"Gel Permeation Chromatography"*) ou SEC (*"Size Exclusion Chromatography"*).

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, par exemple tétrahydrofuranne à une concentration de 1 g/litre. Puis la solution est filtrée sur un filtre, par exemple de porosité 0,45 µm, avant injection dans l'appareillage. L'appareillage utilisé est par exemple une chaîne chromatographique "Waters alliance". Le solvant d'élution est par exemple le tétrahydrofuranne, le débit est de 0,7 ml/min, la température du système est de 35°C. On utilise par exemple un jeu de 4 colonnes "Waters" en série (dénominations "Styragel HMW7", " Styragel HMW6E", et deux " Styragel HT6E"). Le volume injecté de la solution de l'échantillon de polymère est par exemple de 100 µl. Le détecteur est un réfractomètre différentiel (par exemple "Waters 2410") pouvant être équipé d'un logiciel associé d'exploitation des données (par exemple "Waters Millenium"). Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

### I-2-D. Macrostructure des résines hydrocarbonées

La macrostructure (Mw, Mn et Ip) est déterminée par SEC comme indiqué précédemment pour les élastomères : solvant tétrahydrofurane, température 35°C, concentration 1 g/litre, débit de 1 ml/min, solution filtrée sur filtre de porosité 0,45 µm avant injection (100 µl) ; étalonnage de Moore avec des étalons de polystyrène ; jeu de 3 colonnes "Waters" en série ("Styragel HR4E", "Styragel HR1" et "Styragel HR 0.5"), détection par réfractomètre différentiel (par exemple "WATERS 2410") pouvant être équipé d'un logiciel d'exploitation (par exemple "Waters Millenium").

Toutes les valeurs de masses molaires indiquées dans la présente demande sont donc relatives à des courbes d'étalonnages réalisées avec des étalons de polystyrène. Toutes les valeurs de température de transition vitreuse ("Tg") sont mesurées de manière connue par DSC (*Differential Scanning Calorimetry*), selon la norme ASTM D3418 (1999).

### I-3. Composition de l'invention

La composition à propriété auto-obturante conforme à l'invention, à l'état cru (i.e., non réticulé) comme à l'état cuit (i.e., réticulé ou vulcanisé), est donc une composition élastomère à base d'au moins un coupage d'au moins deux élastomères A et B diéniques insaturés spécifiques, solides, et entre 30 et 90 pce d'une résine hydrocarbonée à titre de plastifiant, ladite résine présentant une Tg supérieure à 0°C. Elle a pour autre caractéristique essentielle d'être dépourvue de charge ou, de comporter moins de 100 pce de charge, dont 0 à 10 pce de charge renforçante. Alternativement, elle a pour autre caractéristique essentielle de comporter de 30 à moins de 120 pce de charge dont 0 à moins de 30 pce de charge renforçante.

### I-3-A. Coupage d'élastomères A et B

La composition de l'invention a pour première caractéristique essentielle de comporter, préférentiellement à titre d'élastomère majoritaire, un coupage (ou "mélange") d'au moins deux élastomères solides :
(i) au moins un (c'est-à-dire un ou plusieurs) polybutadiène ou copolymère de butadiène, dit "élastomère A", et
(ii) au moins un (c'est-à-dire un ou plusieurs) caoutchouc naturel ou polyisoprène de synthèse, dit "élastomère B".

Comme polybutadiènes, on peut citer notamment ceux ayant une teneur en unités -1,2 comprise entre 4% et 80% ou ceux ayant une teneur en cis-1,4 supérieure à 80%. Comme copolymères de butadiène, on peut citer notamment les copolymères de butadiène-styrène (SBR), les copolymères de butadiène-isoprène (BIR), les copolymères de styrène-butadiène-isoprène (SBIR). Conviennent notamment les copolymères SBR ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères BIR ayant une teneur en isoprène comprise entre 5% et 90% en poids et une Tg de -40°C à -80°C, les copolymères SBIR ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère SBIR ayant une Tg comprise entre -20°C et -70°C.

Plus préférentiellement encore, l'élastomère A est un homopolymère de butadiène, en d'autres termes un polybutadiène (BR), ce polybutadiène ayant préférentiellement un taux (% molaire) de liaison cis-1,4 supérieur à 90%, plus préférentiellement supérieur à 95%.

L'élastomère B est du caoutchouc naturel ou un polyisoprène de synthèse ; parmi les polyisoprènes de synthèse, sont utilisés préférentiellement des polyisoprènes cis-1,4, préférentiellement ceux ayant un taux (% molaire) de liaisons cis-1,4 supérieur à 90%, plus préférentiellement encore supérieur à 95%, notamment supérieur à 98%.

Les élastomères A et B ci-dessus peuvent être par exemple à blocs, statistiques, séquencés, microséquencés, et être préparés en dispersion ou en solution ; ils peuvent être couplés et/ou étoilés et/ou branchés ou encore fonctionnalisés, par exemple avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

Selon un mode de réalisation préférentiel de l'invention, le rapport pondéral élastomère A : élastomère B est préférentiellement compris dans un domaine de 20:80 à 80:20, plus préférentiellement encore compris dans un domaine de 30:70 à 70:30, en particulier de 40:60 à 60:40.

C'est dans de tels domaines de concentrations respectives des deux élastomères A et B que l'on a observé, selon les différentes utilisations particulières visées, les meilleurs compromis en termes de propriétés auto-obturantes et de température d'utilisation, en particulier lors d'une utilisation à basse température (notamment inférieure à 0°C), comparativement à l'utilisation de caoutchouc naturel seul ou de polybutadiène seul.

Les élastomères A et B sont par définition solides. Par opposition à liquide, on entend par solide toute substance n'ayant pas la capacité de prendre à terme, au plus tard au bout de 24 heures, sous le seul effet de la gravité et à température ambiante (23°C), la forme du récipient qui la contient.

Par opposition à des élastomères du type liquides utilisables éventuellement comme plastifiants liquides dans la composition de l'invention, les élastomères A et B et leur coupage se caractérisent par une viscosité très élevée : leur viscosité Mooney à l'état cru (i.e., non réticulé) ML (1+4), mesurée à 100°C, est de préférence supérieure à 20, plus préférentiellement supérieure à 30, en particulier comprise entre 30 et 130.

Selon une autre définition possible, on entend également par élastomère solide un élastomère à haute masse molaire, c'est-à-dire présentant typiquement une masse molaire moyenne en nombre (Mn) qui est supérieure à 100 000 g/mol ; de préférence, dans un tel élastomère solide, au moins 80%, plus préférentiellement au moins 90% de l'aire de la distribution des masses molaires (mesurée par SEC) est située au-delà de 100 000 g/mol.

De préférence, la masse molaire moyenne en nombre (Mn) de chacun des élastomères A et B est comprise entre 100 000 et 5 000 000 g/mol, plus préférentiellement entre 150 000 et 4 000 000 g/mol ; en particulier elle est comprise entre 200 000 et 3 000 000 g/mol, plus particulièrement entre 200 000 et 1 500 000 g/mol. Préférentiellement, leur indice de polymolécularité Ip (Mw/Mn) est compris entre 1,0 et 10,0, en particulier compris entre 1,0 et 3,0 en ce qui concerne l'élastomère A, entre 3,0 et 8,0 en ce qui concerne l'élastomère B.

L'homme du métier saura ajuster, à la lumière de la présente description et en fonction de l'application particulière visée pour la composition de l'invention, la masse molaire moyenne et/ou la distribution des masses molaires des élastomères A et B. Selon un mode de réalisation particulier de l'invention, il pourra par exemple opter pour une large distribution de masses molaires. S'il souhaite privilégier la fluidité de la composition auto-obturante, il pourra favoriser plutôt la proportion de basses masses molaires. Selon un autre mode de réalisation particulier, combinable ou non au précédent, il pourra aussi privilégier la proportion de masses molaires intermédiaires en vue d'optimiser plutôt la fonction d'auto-obturation (remplissage) de la composition. Selon un autre mode de réalisation particulier, il pourra privilégier plutôt la proportion de hautes masses molaires en vue d'augmenter la tenue mécanique de la composition auto-obturante.

L'obtention de ces différentes distributions de masses molaires pourra se faire par exemple par mélangeage d'élastomères diéniques (élastomères A et/ou élastomères B) de départ différents.

Selon un mode de réalisation préférentiel de l'invention, le coupage d'élastomères solides A et B ci-dessus constitue le seul élastomère solide présent dans la composition auto-obturante de l'invention, c'est-à-dire que le taux global des deux élastomères A et B est alors de 100 pce ; en d'autres termes, les taux d'élastomère A et d'élastomère B sont par conséquent chacun compris dans un domaine de 10 à 90 pce, de préférence de 20 à 80 pce, plus préférentiellement de 30 à 70 pce, en particulier de 40 à 60 pce.

Selon un autre mode de réalisation particulier de l'invention, lorsque le coupage d'élastomères A et B ne constitue pas le seul élastomère solide de la composition de l'invention, ledit coupage constitue préférentiellement l'élastomère solide majoritaire en poids dans la composition de l'invention ; plus préférentiellement, le taux global des deux élastomères A et B est alors supérieur à 50 pce, plus préférentiellement supérieur à 70 pce, en particulier supérieur à 80 pce.

Ainsi, selon des modes de réalisation particuliers de l'invention, le coupage d'élastomères A et B pourrait être associé à d'autres élastomères (solides) minoritaires en poids, qu'il s'agisse d'élastomères diéniques insaturés ou saturés (par exemple butyl), ou encore d'élastomères autres que diéniques, par exemple des élastomères thermoplastiques styréniques (dits "TPS"), par exemple choisis dans le groupe constitué par les copolymères blocs styrène/ butadiène/ styrène (SBS), styrène/ isoprène/ styrène (SIS), styrène/ butadiène/ isoprène/ styrène (SBIS), styrène/ isobutylène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

De manière surprenante, le coupage d'élastomères A et B ci-dessus, non chargé (ou très faiblement chargé), s'est révélé capable, après ajout d'une résine hydrocarbonée thermoplastique dans le domaine étroit préconisé, de remplir la fonction d'une composition auto-obturante performante, comme cela est expliqué en détail dans la suite de l'exposé.

### I-3-B. Résine hydrocarbonée

Le deuxième constituant essentiel de la composition auto-obturante est une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est supérieure à 0°C, notamment supérieure à 20°C (le plus souvent comprise entre 30°C et 95°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*), température à laquelle le produit, par exemple sous forme de poudre, s'agglutine ; cette donnée tend à remplacer le point de fusion, assez mal défini, des résines en général. La température de ramollissement d'une résine hydrocarbonée est généralement supérieure d'environ 50 à 60°C à sa valeur de Tg.

Dans la composition de l'invention, la température de ramollissement de la résine est préférentiellement supérieure à 40°C (en particulier comprise entre 40°C et 140°C), plus préférentiellement supérieure à 50°C (en particulier comprise entre 50°C et 135°C).

Ladite résine est utilisée à un taux pondéral compris entre 30 et 90 pce. En dessous de 30 pce, la performance anti-crevaison s'est avérée insuffisante en raison d'une rigidité trop importante de la composition, alors qu'au-delà de 90 pce, on s'expose à une tenue mécanique insuffisante du matériau avec en outre un risque de performance dégradée à haute température (typiquement supérieure à 70°C). Pour ces raisons, le taux de résine est préférentiellement compris entre 40 et 80 pce, plus préférentiellement encore au moins égal à 45 pce, notamment compris dans un domaine de 45 à 75 pce.

Selon un mode de réalisation préférentiel de l'invention, la résine hydrocarbonée présente au moins une quelconque, plus préférentiellement l'ensemble des caractéristiques suivantes :
- une Tg supérieure à 25°C ;
- un point de ramollissement supérieur à 50°C (en particulier compris entre 50°C et 135°C) ;
- une masse molaire moyenne en nombre (Mn) comprise entre 400 et 2000 g/mol ;
- un indice de polymolécularité (Ip) inférieur à 3 (rappel : Ip = Mw/Mn avec Mw masse molaire moyenne en poids).

Plus préférentiellement, cette résine hydrocarbonée présente au moins une quelconque, plus préférentiellement l'ensemble des caractéristiques suivantes :
- une Tg comprise entre 25°C et 100°C (notamment entre 30°C et 90°C) ;
- un point de ramollissement supérieur à 60°C, en particulier compris entre 60°C et 135°C ;
- une masse moyenne Mn comprise entre 500 et 1500 g/mol ;
- un indice de polymolécularité Ip inférieur à 2.

Le point de ramollissement est mesuré selon la norme ISO 4625 (méthode "Ring and Ball"). La macrostructure (Mw, Mn et Ip) est déterminée par chromatographie d'exclusion stérique (SEC) comme indiqué en introduction de la demande.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

### I-3-C. Charge

La composition de l'invention a pour autre caractéristique essentielle de comporter de 0 à moins de 100 pce d'au moins une (c'est-à-dire une ou plusieurs) charge, dont 0 à moins de 10 pce d'au moins une (c'est-à-dire une ou plusieurs) charge renforçante. Alternativement, la composition de l'invention a pour autre caractéristique essentielle de comporter de 30 à moins de 120 pce de charge dont 0 à moins de 30 pce de charge renforçante.

Par charge, on entend ici tout type de charge, qu'elle soit renforçante (typiquement à particules nanométriques, et préférentiellement de taille moyenne en poids inférieure à 500 nm, notamment entre 20 et 200 nm) ou qu'elle soit non-renforçante ou inerte (typiquement à particules micrométriques, et préférentiellement de taille moyenne en poids supérieure à 1 µm, par exemple entre 2 et 200 µm). La taille moyenne en poids étant mesurée de manière bien connue de l'homme du métier (à titre d'exemple, selon la demande WO2009/083160 paragraphe I.1).

A titre d'exemples de charges connues comme renforçantes par l'homme du métier, on citera notamment du noir de carbone ou une charge inorganique renforçante telle que la silice en présence d'un agent de couplage, ou un coupage de ces deux types de charge. En effet, de manière connue, la silice est une charge renforçante en présence d'un agent de couplage lui permettant de se lier à l'élastomère.

Comme noirs de carbone, par exemple, conviennent tous les noirs de carbone, notamment les noirs conventionnellement utilisés dans les bandages pneumatiques. Parmi ces derniers, on citera par exemple les noirs de carbone de grade (ASTM) 300, 600, 700 ou 900 (par exemple N326, N330, N347, N375, N683, N772, N990). Comme charges inorganiques renforçantes conviennent notamment des charges minérales hautement dispersibles du type silice (SiO₂), notamment les silices précipitées ou pyrogénées présentant une surface BET inférieure à 450 m²/g, de préférence de 30 à 400 m²/g.

A titre d'exemples de charges autres que renforçantes, ou charges inertes connues par l'homme du métier, on citera notamment celles choisies dans le groupe constitué par les cendres (i.e., résidus de combustion), les microparticules de carbonates de calcium naturels (craie) ou synthétiques, les silicates synthétiques ou naturels (tels que kaolin, talc, mica, cloisite), les silices (en l'absence d'agent de couplage), les oxydes de titane, les alumines, les aluminosilicates (argile, bentonite), et leurs mélanges. Des charges colorantes ou colorées par exemple par des pigments pourront être avantageusement utilisées pour colorer la composition selon la couleur désirée. Préférentiellement, la composition de l'invention comporte une charge autre que renforçante choisie parmi le groupe constitué par la craie, le talc, le kaolin et leurs mélanges.

L'état physique sous lequel se présente la charge est indifférent, que ce soit sous forme de poudre, de microperles, de granulés, de billes ou toute autre forme densifiée appropriée. Bien entendu, on entend également par charge des mélanges de différentes charges, renforçantes et/ou non renforçantes.

Ces charges, renforçantes ou autres, sont habituellement là pour donner de la stabilité dimensionnelle, c'est-à-dire une tenue mécanique minimale à la composition finale. On en met de préférence d'autant moins dans la composition que la charge est connue comme renforçante vis-à-vis d'un élastomère, notamment d'un élastomère diénique tel que du caoutchouc naturel ou du polybutadiène.

L'homme de l'art saura, à la lumière de la présente description, ajuster le taux de charge de la composition de l'invention afin d'atteindre les niveaux de propriétés souhaités et adapter la formulation à l'application spécifique envisagée. Préférentiellement, la composition de l'invention comporte de 0 à moins de 70 pce de charge, dont 0 à moins de 10 pce de charge renforçante.

Plus préférentiellement encore, la composition de l'invention comporte de 0 à 70 pce de charge dont 0 à moins de 5 pce de charge renforçante. De manière très préférentielle, la composition de l'invention comporte une charge autre que renforçante, à un taux pouvant aller de 5 à 70 pce, de préférence de 15 à 50 pce, en particulier de 25 à 40 pce.

Selon l'application envisagée, l'invention peut notamment se décliner en deux modes de réalisation, selon le taux de charge. En effet, une quantité de charge trop élevée, pénalise les propriétés requises de souplesse, de déformabilité et d'aptitude au fluage, tandis que la présence d'une certaine quantité de charge (par exemple de 30 à moins de 120 pce), permet d'améliorer la processabilité, et de diminuer le coût.

Ainsi, selon un premier mode de réalisation, la composition est très faiblement chargée, c'est-à-dire qu'elle comporte de 0 à moins de 30 pce de charge, dont 0 à moins de 10 pce de charge renforçante. Selon ce premier mode de réalisation, cette composition a pour avantage de permettre une composition auto-obturante ayant de bonnes propriétés anti-crevaison à froid et à chaud.

De manière plus préférentielle selon ce premier mode de réalisation, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

Préférentiellement également selon ce premier mode de réalisation, si une charge autre que renforçante est utilisée, son taux est de préférence de 5 à moins de 30 pce, en particulier de 10 à moins de 30 pce et plus préférentiellement de 15 à moins de 30 pce.

Par ailleurs, selon un second mode de réalisation, la composition comporte de 30 à moins de 120 pce de charge, préférentiellement de plus de 30 à moins de 100 pce, et plus préférentiellement de 35 à 80 pce, dont, selon ce second mode de réalisation, 0 à moins de 30 pce de charge renforçante (plus préférentiellement de 0 à moins de 15 pce). Selon ce deuxième mode de réalisation, cette composition a pour avantage d'améliorer la processabilité, et de diminuer le coût tout en n'étant pas trop pénalisée quant à ses propriétés de souplesse, de déformabilité et d'aptitude au fluage. Par ailleurs, ce second mode de réalisation confère à la composition une performance anti-crevaison nettement améliorée.

De manière préférentielle selon ce second mode de réalisation, si une charge renforçante est présente dans la composition de l'invention, son taux est préférentiellement inférieur à 5 pce (soit entre 0 et 5 pce), en particulier inférieur à 2 pce (soit entre 0 et 2 pce). De tels taux se sont avérés particulièrement favorables au procédé de fabrication de la composition de l'invention, tout en offrant à cette dernière d'excellentes performances auto-obturantes. On utilise plus préférentiellement un taux compris entre 0,5 et 2 pce, en particulier lorsqu'il s'agit de noir de carbone.

Préférentiellement selon ce second mode de réalisation, le taux de charge autre que renforçante est de 5 à moins de 120 pce, en particulier de 10 à moins de 100 pce et plus préférentiellement de 15 à 80 pce. De manière très préférentielle, le taux de charge autre que renforçante est compris dans un domaine allant de 25 à 50 pce, plus préférentiellement encore de 30 à 50 pce.

### I-3-D. Additifs divers

Les constituants de base précédemment décrits, à savoir le coupage d'élastomères A et B, la résine plastifiante hydrocarbonée et la charge optionnelle sont suffisants à eux seuls pour que la composition de l'invention remplisse totalement sa fonction anti-crevaison vis-à-vis des objets pneumatiques dans lesquels elle est utilisée.

En particulier, elle ne nécessite pas la présence d'un plastifiant liquide tel qu'un élastomère liquide, qui peut être préjudiciable comme on l'a déjà dit en introduction du présent mémoire, lorsqu'un tel plastifiant est utilisé en trop grande quantité, aux propriétés de fluidité et donc entraîner des risques de fluage excessif de la composition lors d'une utilisation à une température relativement élevée.

Toutefois, selon un mode de réalisation particulier de l'invention, il peut être utile dans certains cas, selon l'application particulière visée, d'utiliser en faible quantité, à un taux préférentiellement inférieur à 60 pce, un plastifiant liquide (à 23°C) dit "à basse Tg" dont la fonction est notamment de ramollir la matrice en diluant la matrice d'élastomère diénique et la résine hydrocarbonée, améliorant ainsi, en particulier, les performances d'auto-obturation "à froid" (c'est-à-dire typiquement pour une température inférieure à 0°C) ; sa Tg est par définition inférieure à -20°C, elle est de préférence inférieure à -40°C.

Tout élastomère liquide, toute huile d'extension, qu'elle soit de nature aromatique ou non-aromatique, plus généralement tout agent plastifiant liquide connu pour ses propriétés plastifiantes vis-à-vis d'élastomères, notamment diéniques, est utilisable. A température ambiante (23°C), ces plastifiants ou ces huiles, plus ou moins visqueux, sont des liquides, par opposition notamment à des résines hydrocarbonées qui sont par nature solides à température ambiante.

Pour rappel, par opposition à un solide, on entend par liquide toute substance ayant la capacité de prendre à terme, au plus tard au bout de 24 heures, sous le seul effet de la gravité et à température ambiante (23°C), la forme du récipient qui la contient.

Par opposition à des élastomères solides, les plastifiants et élastomères liquides (i.e., à faible masse molaire) se caractérisent par une viscosité très basse : de préférence, leur viscosité Brookfield mesurée à 65°C est inférieure à 2 000 000 cP (cP signifiant centipoise ; 1 cP égale à 1 mPa.s), plus préférentiellement inférieure à 1 500 000 cP; elle est notamment comprise entre 200 et 1 000 000 cP, typiquement, pour ce qui concerne les élastomères liquides, entre 2 000 et 1 000 000 cP.

Au sens de la présente demande de brevet, on entend par élastomère liquide un polymère liquide, notamment diénique (tel que isoprénique ou butadiénique) qui, à l'état solide (c'est-à-dire plus haute masse molaire), aurait les propriétés d'un élastomère.

Selon une autre définition possible, on entend également par élastomère liquide un élastomère dont la masse molaire moyenne en nombre (Mn) est inférieure à 100 000 g/mol ; de préférence, dans un tel élastomère liquide, au moins 80%, plus préférentiellement au moins 90%, de l'aire de la distribution des masses molaires (mesurée par SEC) est située en deçà de 100 000 g/mol.

Conviennent notamment des élastomères liquides dont la masse molaire moyenne en nombre (Mn) est comprise entre 400 et 90 000 g/mol, plus généralement entre 800 et 90 000 g/mol, par exemple sous la forme de caoutchouc naturel dépolymérisé, de BR, SBR ou IR liquides, tels que décrits par exemple dans les documents brevet US 4 913 209, US 5 085 942 et US 5 295 525 précités. Si un élastomère diénique liquide (par exemple NR, IR ou BR liquides) est utilisé comme plastifiant, il pourra être éventuellement généré in situ, c'est-à-dire lors de la fabrication même de la composition de l'invention, par exemple par un travail (thermo)mécanique (dépolymérisation par cassage de chaînes) approprié des élastomères solides de départ. Peuvent être également utilisés des mélanges de tels élastomères liquides avec des huiles telles que décrites ci-après.

Conviennent également des huiles d'extension, notamment celles choisies dans le groupe constitué par les huiles polyoléfiniques (c'est-à-dire issues de la polymérisation d'oléfines, monooléfines ou dioléfines, par exemple du type polyéthylène glycol ou polypropylène glycol), les huiles paraffiniques, les huiles naphténiques (à basse ou haute viscosité, hydrogénées ou non), les huiles aromatiques ou DAE (*Distillate Aromatic Extracts*), les huiles MES (*Medium Extracted Solvates*), les huiles TDAE (*Treated Distillate Aromatic Extracts*), les huiles minérales, les huiles végétales (et leurs oligomères, e.g. huiles de palme, colza, soja, tournesol) et les mélanges de ces huiles.

Selon un mode de réalisation particulier, on utilise par exemple une huile du type polybutène, en particulier une huile polyisobutylène (en abrégé "PIB"), qui a démontré un excellent compromis de propriétés comparativement aux autres huiles testées, notamment à une huile conventionnelle du type paraffinique. A titre d'exemples, des huiles PIB sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par EXXON sous la dénomination "Telura 618" ou par Repsol sous la dénomination "Extensol 51".

Conviennent également, à titre de plastifiants liquides, des plastifiants éthers, esters, phosphates, sulfonates, plus particulièrement ceux choisis parmi esters et phosphates. A titre de plastifiants phosphates préférentiels, on peut citer ceux qui contiennent entre 12 et 30 atomes de carbone, par exemple le trioctyle phosphate. A titre de plastifiants esters préférentiels, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer comme triesters de glycérol préférentiels ceux qui sont constitués majoritairement (pour plus de 50 %, plus préférentiellement pour plus de 80 % en poids) d'un acide gras insaturé en C₁₈, c'est-à-dire d'un acide gras choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238 (ou US 2004/0127617), à titre d'agents plastifiants dans des bandes de roulement pour pneumatiques.

La masse molaire moyenne en nombre (Mn) des plastifiants liquides autres que des élastomères liquides est préférentiellement comprise entre 400 et 25 000 g/mol, plus préférentiellement encore comprise entre 800 et 10 000 g/mol (mesurée par SEC comme indiqué précédemment pour la résine hydrocarbonée). Pour des masses Mn trop basses, il peut exister un risque de migration du plastifiant à l'extérieur de la composition, tandis que des masses trop élevées peuvent entraîner une rigidification excessive de la composition. Une masse Mn comprise entre 1 000 et 4 000 g/mol s'est avérée constituer un excellent compromis pour les applications visées, en particulier pour une utilisation dans un bandage pneumatique.

En résumé, le plastifiant liquide est préférentiellement choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés. Plus préférentiellement, ce plastifiant liquide est choisi dans le groupe constitué par les élastomères liquides, les huiles polyoléfiniques, les huiles végétales et les mélanges de ces composés.

L'homme du métier saura, à la lumière de la description et des exemples de réalisation qui suivent, ajuster la quantité de plastifiant liquide en fonction de la nature de ces derniers et des conditions particulières d'usage de la composition de l'invention, notamment de l'objet pneumatique dans lequel elle est destinée à être utilisée.

De préférence, et en particulier, lorsqu'une charge autre que renforçante est utilisée, il pourra être avantageux d'inclure dans la composition, un plastifiant liquide dont le taux est inférieur ou égal à 60 pce, par exemple compris dans un domaine de 5 à 60 pce, préférentiellement de 5 à 40 pce, plus préférentiellement dans un domaine de 10 à 30 pce. En dessous des minima indiqués, la composition élastomère risque de présenter une rigidité trop forte pour certaines applications tandis qu'au-delà des maxima préconisés, on s'expose à un risque de cohésion insuffisante de la composition et de propriétés auto-obturantes dégradées.

Divers autres additifs peuvent être ajoutés aux composants précédemment décrits, typiquement en faible quantité (préférentiellement à des taux inférieurs à 20 pce, plus préférentiellement inférieurs à 15 pce), comme par exemple des agents de protection tels que des anti-UV, anti-oxydants ou anti-ozonants, divers autres stabilisants, des agents colorants avantageusement utilisables pour la coloration de la composition de l'invention. Selon l'application visée, des fibres, sous forme de fibres courtes ou de pulpe, pourraient être éventuellement ajoutées pour donner plus de cohésion à la composition.

Selon un mode de réalisation préférentiel de l'invention, la composition comporte en outre un agent de réticulation pouvant être constitué d'un seul ou plusieurs composés. Cet agent de réticulation est préférentiellement un agent de réticulation à base de soufre et/ou d'un donneur de soufre. En d'autres termes, cet agent de réticulation est un agent dit "de vulcanisation".

Selon un mode de réalisation préférentiel, l'agent de vulcanisation comporte du soufre et, à titre d'activateur de vulcanisation, un dérivé guanidique c'est-à-dire une guanidine substituée. Les guanidines substituées sont bien connues de l'homme du métier (voir par exemple WO 00/05300) : on citera à titre d'exemples non limitatifs la N,N'-diphénylguanidine (en abrégé "DPG"), la triphénylguanidine ou encore la di-o-tolylguanidine. On utilise de préférence la DPG. Le taux de soufre est par exemple compris entre 0,1 et 1,5 pce, en particulier entre 0,2 et 1,2 pce (notamment entre 0,2 et 1,0 pce) et le taux de dérivé guanidique est lui-même compris entre 0 et 1,5 pce, en particulier entre 0 et 1,0 pce (notamment dans un domaine de 0,2 à 0,5 pce).

Ledit agent de réticulation ou vulcanisation ne nécessite pas la présence d'un accélérateur de vulcanisation. Selon un mode de réalisation préférentiel, la composition peut donc être dépourvue d'un tel accélérateur, ou tout au plus en comporter moins de 1 pce, plus préférentiellement moins de 0,5 pce.

Toutefois, de manière générale, si un tel accélérateur est utilisé, on peut citer comme exemple tout composé (accélérateur dit primaire ou secondaire) susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC"), 1-phényl-2,4-dithiobiuret ("DTB"), dibuthylphosphorodithioate de zinc ("ZBPD"), 2-éthylhexylphosphorodithioate de zinc ("ZDT/S"), disulfure de bis O,O-di(2-éthylhexyl)-thiophosphonyle ("DAPD"), dibutylthiourée ("DBTU"), isopropyl-xanthate de zinc ("ZIX") et les mélanges de ces composés. Selon un autre mode de réalisation avantageux, le système de vulcanisation ci-dessus peut être dépourvu de zinc ou d'oxyde de zinc (connus comme activateurs de vulcanisation), ou tout au plus en comporter moins de 1 pce, plus préférentiellement moins de 0,5 pce.

Selon un autre mode de réalisation préférentiel de l'invention, l'agent de vulcanisation comporte un donneur de soufre. La quantité d'un tel donneur de soufre sera ajustée de préférence entre 0,5 et 15 pce, plus préférentiellement entre 0,5 et 10 pce (notamment entre 1 et 5 pce), notamment de manière à atteindre les taux de soufre équivalents préférentiels indiqués précédemment.

Les donneurs de soufre sont bien connus de l'homme du métier, on citera notamment les polysulfures de thiurame, connus accélérateurs de vulcanisation et ayant pour formule (I) : 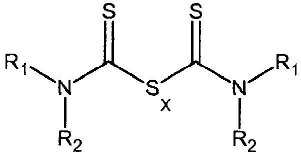 dans laquelle :
- x est un nombre (entier, ou décimal dans le cas de mélanges de polysulfures) qui est égal ou supérieur à deux, de préférence compris dans un domaine de 2 à 8 ;
- R₁ et R₂, identiques ou différents, représentent un radical hydrocarboné, de préférence choisi parmi les alkyles ayant 1 à 6 atomes de carbone, les cycloalkyles ayant 5 à 7 atomes de carbone, les aryles, aralkyles ou alkaryles ayant 6 à 10 atomes de carbone.

Dans la formule (I) ci-dessus, R₁ et R₂ pourraient former un radical hydrocarboné bivalent comportant 4 à 7 atomes de carbone.

Ces polysulfures de thiurame sont choisis plus préférentiellement dans le groupe constitué par le disulfure de tétrabenzylthiurame ("TBzTD"), le disulfure de tétraméthylthiurame ("TMTD"), le tétrasulfure de dipentaméthylènethiurame ("DPTT"), et les mélanges de tels composés. Plus préférentiellement est utilisé le TBzTD, particulièrement aux taux préférentiels indiqués ci-dessus pour un donneur de soufre (soit entre 0,1 et 15 pce, plus préférentiellement entre 0,5 et 10 pce, notamment entre 1 et 5 pce).

Outre les élastomères solides et autres additifs précédemment décrits, la composition de l'invention pourrait aussi comporter, préférentiellement selon une fraction pondérale minoritaire par rapport au coupage d'élastomères solides A et B, des polymères solides autres que des élastomères, tels que par exemple des polymères thermoplastiques.

### I-4. Fabrication de la composition auto-obturante

La composition précédemment décrite peut être fabriquée par tout moyen approprié, par exemple par mélangeage et/ou malaxage dans des mélangeurs à palette, des mélangeurs à cylindres ou encore des mélangeurs-extrudeurs à vis, jusqu'à obtention d'un mélange intime et homogène de ses différents composants.

Toutefois, selon les cas, le problème de fabrication suivant peut se poser : en l'absence de charge, ou tout au moins d'une quantité notable de charge, la composition de l'invention est faiblement cohésive. Ce manque de cohésion peut être tel que le pouvoir collant de la composition, dû par ailleurs à la présence d'un taux relativement élevé de résine hydrocarbonée, n'est pas compensé et l'emporte ; il s'ensuit alors un risque de collage parasite sur les outils de mélangeage utilisés, qui peut être rédhibitoire dans des conditions de mise en œuvre industrielle.

Le cas échéant, pour pallier les problèmes ci-dessus, la composition de l'invention, lorsqu'elle comporte un agent de réticulation, peut être préparée préférentiellement selon un procédé comportant les étapes suivantes :
a) on fabrique dans un premier temps un masterbatch comportant au moins le coupage des élastomères solides A et B et entre 30 et 90 pce de la résine hydrocarbonée, en mélangeant ces différents composants dans un mélangeur, à une température ou jusqu'à une température dite "température de mélangeage à chaud" (ou "première température") qui est supérieure à la température de ramollissement de la résine hydrocarbonée ;
b) puis, dans un deuxième temps, on incorpore audit masterbatch la totalité ou au moins 50% en poids de l'agent de réticulation, en mélangeant le tout, dans le même mélangeur ou dans un mélangeur différent.

La température de mélangeage à chaud ci-dessus est bien entendu celle du masterbatch mesurable in situ et non pas la température de consigne du mélangeur lui-même.

Par "masterbatch" ("mélange-maître") ou "composition intermédiaire" doit être entendu le mélange d'au moins la matrice élastomère (ici, les deux élastomères A et B) avec la résine hydrocarbonée, mélange précurseur de la composition auto-obturante finale, prête à l'emploi. Peuvent être éventuellement incorporés à ce masterbatch divers additifs, qu'ils soient destinés au masterbatch proprement dit (par exemple un agent de stabilisation, un agent colorant ou anti-UV, un antioxydant, etc.) ou à la composition auto-obturante finale à laquelle est destiné le masterbatch (charges, plastifiant liquide, etc.).

Le masterbatch peut être fabriqué dans tout outil de mélangeage, notamment dans un mélangeur à palette, un mélangeur à cylindres, une boudineuse, tout mélangeur capable de mélanger, malaxer ses différents composants suffisamment jusqu'à l'obtention d'un mélange intime homogène desdits composants. De préférence, on utilise un mélangeur-extrudeur à vis, à pas constant ou non, apte de manière connue à introduire un cisaillement important du mélange (au moins élastomère diénique et résine) en cours de formation.

A l'état initial, c'est-à-dire avant son contact avec les élastomères, la résine peut se présenter à l'état solide ou à l'état liquide. De préférence, pour un meilleur mélangeage, les élastomères A et B solides sont mis au contact de la résine hydrocarbonée à l'état liquide. Il suffit pour cela de chauffer la résine à une température supérieure à sa température de ramollissement. Selon le type de résine hydrocarbonée utilisée, la température de mélangeage à chaud est préférentiellement supérieure à 70°C, plus préférentiellement supérieure à 90°C, par exemple comprise entre 100°C et 150°C.

Pour un mélangeage optimal du masterbatch, la résine hydrocarbonée est préférentiellement injectée à l'état liquide, sous pression, dans le mélangeur.

Selon un autre mode de réalisation préférentiel, combiné ou non au précédent, l'étape (a) de mélangeage à chaud est conduite à l'abri de l'oxygène. L'injection sous pression de la résine, à une température à laquelle celle-ci est complètement fondue, a l'avantage d'introduire dans la chambre de mélangeage du mélangeur une résine dégazée, plus stable mécaniquement et chimiquement.

L'étape (b) d'incorporation de tout ou partie de de l'agent de réticulation peut être conduite sur le même mélangeur que celui de l'étape (a) qui précède, préférentiellement un mélangeur-extrudeur à vis, ou bien sur un autre type de mélangeur, par exemple un autre mélangeur-extrudeur à vis ou un mélangeur externe à cylindres.

Selon un mode de réalisation préférentiel, en particulier lorsqu'on utilise un mélangeur externe à cylindres, l'étape (b) est conduite à une température ou jusqu'à une température maximale qui est maintenue inférieure à la température de ramollissement de la résine, ceci afin de limiter les risques de collant parasite excessif du masterbatch à l'outil de mélangeage. Ainsi, selon le type de résine hydrocarbonée utilisée, la température de mélangeage de l'étape (b) peut être préférentiellement inférieure à 50°C, plus préférentiellement comprise entre 20°C et 40°C.

Selon un autre mode de réalisation particulier, indépendamment de la température de ramollissement de la résine, et ceci quel que soit l'outil de mélangeage utilisé pour l'étape (b), cette dernière est conduite à une température ou jusqu'à une température maximale qui est maintenue inférieure à 130°C, de préférence inférieure à 100°C, en particulier inférieure à 80°C.

Entre les étapes (a) et (b) décrites ci-dessus peut être intercalée si besoin est une étape intermédiaire de refroidissement du masterbatch afin d'amener sa température à la valeur souhaitée avant début de l'étape (b), qu'il s'agisse d'une température visée inférieure à la température de ramollissement de la résine, ou, indépendamment, d'une température visée inférieure à 130°C, préférentiellement inférieure à 100°C, en particulier inférieure à 80°C, ceci avant introduction (étape (b)) de tout ou partie de l'agent de réticulation dans le masterbatch précédemment fabriqué.

Lorsqu'une charge telle que par exemple du noir de carbone et/ou de la craie est utilisée, elle peut être introduite au cours de l'étape a) c'est-à-dire en même temps que les élastomères A et B et la résine hydrocarbonée, ou bien au cours de l'étape (b) c'est-à-dire en même temps que l'agent de réticulation. On a constaté qu'une très faible proportion de noir de carbone, préférentiellement comprise entre 0,5 et 2 pce, améliorait encore le mélangeage et la fabrication de la composition, ainsi que son extrudabilité finale.

Le plastifiant liquide optionnel peut être incorporé à tout moment, en tout ou partie au cours de l'une quelconque des étapes du procédé, notamment au cours de l'étape (a) de fabrication du masterbatch lui-même (dans ce cas, avant, pendant ou après incorporation de la résine hydrocarbonée dans le coupage d'élastomères A et B), "à chaud" (c'est-à-dire à température supérieure à la température de ramollissement de la résine) ou à une température plus basse, ou par exemple après la fabrication du masterbatch, (dans ce cas, avant, pendant ou après ajout de l'agent de réticulation, voire même au cours de la mise en forme (extrusion) finale de la composition de l'invention).

Selon un mode de réalisation particulier, on introduit par exemple, au moins en partie, le plastifiant liquide au cours de l'étape (a) de fabrication du masterbatch, plus préférentiellement dans ce cas soit en même temps que la résine hydrocarbonée, soit après introduction de cette dernière. Selon un mode de réalisation avantageux, un mélange de la résine hydrocarbonée et du plastifiant liquide pourra être préparé préalablement à l'incorporation dans la matrice d'élastomère solide.

Selon un autre mode de réalisation particulier, on introduit par exemple, au moins en partie, le plastifiant liquide au cours de l'étape (b) d'incorporation de l'agent de réticulation.

Selon un autre mode de réalisation particulier, le plastifiant liquide peut être incorporé en tout ou partie au cours d'une étape (c) postérieure à l'étape (b), c'est-à-dire après incorporation de l'agent de réticulation, dans le même mélangeur ou un mélangeur différent de celui de l'étape (b), qu'il s'agisse par exemple d'un mélangeur-extrudeur à vis ou d'un mélangeur externe à cylindres. Cette incorporation est possible sur le même mélangeur externe mais il peut être avantageux d'utiliser un mélangeur-extrudeur à vis dans lequel on introduit d'abord le mélange issu de l'étape (b) puis le plastifiant liquide, un tel mélangeur-extrudeur étant équipé d'une zone imposant un fort cisaillement et donc permettant une bonne homogénéisation de la composition auto-obturante finale.

Selon un autre mode de réalisation particulier, si la totalité de l'agent de réticulation n'est pas introduite au cours de l'étape (b), alors le complément de cet agent de réticulation peut être introduit à l'étape (a) ou à l'étape (c) supplémentaire décrite ci-dessus.

Il est aussi possible de réaliser successivement toutes les étapes de fabrication de la composition de l'invention avec un seul outil, un mélangeur-extrudeur à vis équipé des moyens d'introduction et de dosage des différents constituants disposés de façon décalée le long de la chambre de mélangeage, de zones homogénéisatrices appropriées et d'une filière adaptée au produit semi-fini fabriqué.

En sortie de l'étape (b) ou optionnellement de l'étape (c) décrite ci-dessus, la fabrication de la composition de l'invention est terminée ; elle est mise en forme dimensionnellement de manière connue en soi, par exemple par extrusion à travers une filière de dimensions adaptées au produit semi-fini choisi, par exemple une couche de caoutchouc de relative grande largeur, une bandelette étroite ou un profilé apte à être directement utilisé dans l'assemblage d'une ébauche de bandage pneumatique ou encore une bande réutilisable ultérieurement dans un outil d'extrusion.

Un tel procédé s'est avéré particulièrement bien adapté à la fabrication rapide, dans des conditions de mise en œuvre acceptables du point de vue industriel, de la composition conforme à l'invention, cette composition pouvant comporter des taux relativement élevés de résine hydrocarbonée sans nécessiter notamment l'emploi d'élastomère à l'état liquide à titre de plastifiant.

L'étape (a) de fabrication du masterbatch est réalisée de préférence dans un mélangeur-extrudeur à vis tel que schématisé par exemple de manière simple à la figure 2.

On voit sur cette figure 2 un mélangeur-extrudeur à vis (20) comportant essentiellement une vis (par exemple une mono-vis) d'extrusion (21), une première pompe de dosage (22) pour le coupage d'élastomères A et B (solides) et une deuxième pompe de dosage (23) pour la résine (solide ou liquide) et optionnellement le plastifiant liquide. L'élastomère A et l'élastomère B peuvent être introduits au moyen d'une pompe de dosage unique, s'ils ont déjà été mélangés ensemble préalablement, ou bien être introduits séparément au moyen de deux pompes de dosage séparées (une seule a été représentée sur la figure 2, pour simplification). De même, la résine hydrocarbonée et le plastifiant liquide optionnel peuvent être introduits eux aussi au moyen d'une pompe de dosage unique, s'ils ont déjà été mélangés préalablement, ou bien être introduits séparément au moyen de deux pompes de dosage séparées (une seule représentée sur la figure 2). Les pompes de dosages (22, 23) permettent de monter en pression tout en conservant la maîtrise du dosage et les caractéristiques initiales des matériaux, la dissociation des fonctions de dosages (élastomères et résine) et de mélangeage offrant en outre une meilleure maîtrise du procédé.

Les produits, poussés par la vis d'extrusion, sont intimement mélangés sous le très fort cisaillement apporté par la rotation de la vis, progressant ainsi à travers le mélangeur, par exemple jusqu'à une partie (24) dite "hacheur-homogénéisateur", zone à la sortie de laquelle le masterbatch final (25) ainsi obtenu, progressant dans le sens de la flèche (F), est finalement extrudé à travers une filière (26) permettant d'extruder le produit aux dimensions souhaitées. Selon un mode de réalisation particulier, il peut être avantageux de maintenir la partie "hacheur-homogénéisateur" à une température plus basse que celle de la vis d'extrusion, par exemple à une température comprise entre 40°C et 60°C, ceci afin de limiter le pouvoir collant du masterbatch, améliorer ainsi le travail mécanique et l'homogénéité du masterbatch.

A titre d'exemple, le masterbatch ainsi extrudé, prêt à être utilisé, peut être ensuite transféré et refroidi par exemple sur un mélangeur externe à cylindres pour introduction de l'agent de réticulation (sa totalité ou au moins 50% en poids) et de la charge optionnelle ; la température à l'intérieur dudit mélangeur externe est préférentiellement maintenue inférieure à la température de ramollissement de la résine, par ailleurs étant préférentiellement inférieure à 100°C, notamment inférieure à 80°C. Avantageusement, les cylindres ci-dessus sont refroidis, par exemple par circulation d'eau, à une température inférieure à 40°C, de préférence inférieure à 30°C, de manière à éviter ou limiter un collage parasite de la composition sur les parois du mélangeur.

Il est possible de mettre directement en forme le masterbatch en sortie du dispositif d'extrusion (20) pour faciliter son transport et/ou sa mise en place dans le mélangeur externe. On peut aussi utiliser une alimentation en continu du mélangeur externe à cylindres.

Grâce au dispositif spécifique et au procédé préférentiels décrits ci-dessus, il est possible de préparer la composition de l'invention dans des conditions industrielles satisfaisantes, sans risque de pollution des outils due à un collage parasite excessif de la composition sur les parois des mélangeurs.

### I-5. Utilisation de la composition de l'invention comme couche anti-crevaison

La composition à propriété auto-obturante précédemment décrite est une composition solide (à 23°C) qui se caractérise notamment, grâce à sa formulation spécifique, par une très grande souplesse et haute déformabilité. Sa viscosité Mooney mesurée à 35°C à l'état cru (i.e., avant cuisson) est préférentiellement supérieure à 20, plus préférentiellement comprise entre 20 et 80, selon sa formulation particulière et l'application visée, en particulier selon la présence ou non d'un agent plastifiant liquide.

Elle peut être utilisée comme couche anti-crevaison dans tout type d'objet "pneumatique", c'est-à-dire, par définition, tout objet qui prend sa forme utilisable quand on le gonfle d'air. A titre d'exemples de tels objets pneumatiques, on peut citer les bateaux pneumatiques, les ballons ou balles utilisées pour le jeu ou le sport.

Elle est particulièrement bien adaptée à une utilisation comme couche anti-crevaison dans un objet pneumatique, produit fini ou semi-fini, en caoutchouc, tout particulièrement dans un bandage pneumatique pour véhicule automobile tel qu'un véhicule de type deux roues, tourisme ou industriel, ou non automobile tel que vélo.

Une telle couche anti-crevaison est préférentiellement disposée sur la paroi interne de l'objet pneumatique, la recouvrant totalement ou au moins en partie, mais elle peut être également intégrée complètement à sa structure interne.

L'épaisseur de la couche anti-crevaison est préférentiellement supérieure à 0,3 mm, plus préférentiellement comprise entre 0,5 mm et 10 mm (en particulier entre 1 et 5 mm).

On comprendra aisément que, selon les domaines d'application spécifiques, les dimensions et les pressions en jeu, le mode de mise en œuvre de l'invention peut varier, la couche anti-crevaison comportant alors plusieurs gammes d'épaisseur préférentielles. Ainsi par exemple, pour des bandages pneumatiques de type tourisme, elle peut avoir une épaisseur d'au moins 0,5 mm, préférentiellement comprise entre 1 et 5 mm. Selon un autre exemple, pour des bandages pneumatiques de véhicules poids lourds ou agricole, l'épaisseur préférentielle peut se situer entre 1 et 6 mm. Selon un autre exemple, pour des bandages pneumatiques de véhicules dans le domaine du génie civil ou pour avions, l'épaisseur préférentielle peut se situer entre 2 et 10 mm. Enfin, selon un autre exemple, pour des bandages pneumatiques de vélo, l'épaisseur préférentielle peut se situer entre 0,4 et 2 mm.

La composition de l'invention a l'avantage de ne présenter, dans une très large gamme de températures d'utilisation des bandages pneumatiques, pratiquement aucune pénalisation en termes de résistance au roulement par rapport à un bandage pneumatique ne comportant pas une couche auto-obturante. Comparativement aux compositions auto-obturantes usuelles, sont notablement réduits les risques d'un fluage excessif lors d'une utilisation à température relativement élevée (typiquement supérieure à 60°C), fréquemment rencontrée lors de l'utilisation de certains bandages pneumatiques. Ses propriétés auto-obturantes sont également améliorées lors d'une utilisation à basse température (typiquement inférieure à 0°C).

Bien entendu, l'invention s'applique aux cas où la composition de l'invention précédemment décrite, à l'état cru (i.e., non réticulé) comme à l'état cuit (i.e., réticulé ou vulcanisé), est utilisée dans un bandage ou tout autre objet pneumatique sans être nécessairement combinée à une couche étanche à l'air.

Toutefois, selon un mode particulier et préférentiel de réalisation de l'invention, la composition de l'invention est associée à au moins une couche étanche à l'air, pour constituer un produit stratifié multi-couches, auto-obturant et étanche à l'air, utilisable notamment comme paroi interne d'un objet pneumatique tel qu'un bandage pneumatique.

La seconde couche du stratifié peut comporter tout type de matériau susceptible de remplir la fonction de film étanche à l'air (ou plus généralement aux gaz), qu'il s'agisse par exemple d'un matériau métallique ou d'un matériau polymère. De préférence, cette couche étanche à l'air a une épaisseur supérieure à 0,05 mm, plus préférentiellement comprise entre 0,05 et 6 mm (par exemple de 0,1 à 2 mm).

Selon un mode de réalisation préférentiel, cette seconde couche étanche à l'air comporte une composition de caoutchouc butyl. Par caoutchouc butyl, doit être entendu de manière connue un copolymère d'isobutylène et d'isoprène (en abrégé IIR), ainsi que les versions halogénées, de préférence chlorées ou bromées, de ce type de copolymère. De préférence, le caoutchouc butyl est un caoutchouc butyl halogéné ou un coupage de butyls halogéné et non halogéné. Le caoutchouc butyl peut être utilisé seul ou en association avec un ou plusieurs autre(s) élastomère(s), notamment élastomères diénique(s) tels que par exemple du caoutchouc naturel ou un polyisoprène synthétique.

Selon un autre mode de réalisation préférentiel, cette seconde couche étanche à l'air comporte une composition d'élastomère thermoplastique styrénique (TPS), préférentiellement à blocs polystyrène et polyisobutylène, telle que décrite par exemple dans les demandes de brevet WO 2008/145276, WO 2008/145277 ou WO 2009/007064.

La composition étanche à l'air comporte par ailleurs les divers additifs usuellement présents dans les couches étanches à l'air connues de l'homme du métier, tels que des charges renforçantes comme le noir de carbone, des charges lamellaires améliorant l'étanchéité (par exemple des phyllosilicates tels que kaolin, talc, mica, argiles ou argiles modifiées (*"organo clays"*)), des agents de protection tels que anti-oxydants ou anti-ozonants, un système de réticulation (par exemple à base de soufre ou de peroxyde), divers agents de mise en œuvre ou autres stabilisants.

Les deux couches du stratifié ci-dessus peuvent être assemblées par tout moyen approprié, par exemple par un simple traitement thermique, de préférence sous pression (par exemple quelques min à 150°C sous 16 bars), à l'aide de divers agents adhésifs ou encore en intercalant une troisième couche adhésive solidarisant les deux autres.

### II. EXEMPLE DE REALISATION DE L'INVENTION

La composition de l'invention à propriété auto-obturante et le stratifié multicouches décrits précédemment sont avantageusement utilisables dans les bandages pneumatiques de tous types de véhicules, en particulier dans les bandages pour véhicules tourisme susceptibles de rouler à très haute vitesse ou les bandages pour véhicules industriels tels que Poids-lourd susceptibles de rouler et fonctionner sous des conditions de températures internes particulièrement élevées.

A titre d'exemple, la figure 1 annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multi-couches (10) comportant au moins deux couches (10a, 10b), auto-obturant grâce à sa première couche (10a) et étanche à l'air grâce à sa seconde couche (10b).

Conformément à un mode de réalisation préférentiel de l'invention, les deux couches (10a, 10b) couvrent substantiellement toute la paroi interne du bandage pneumatique, se prolongeant d'un flanc à l'autre, au moins jusqu'au niveau du crochet de jante lorsque le bandage pneumatique est en position montée. Selon d'autres modes de réalisation possibles, la couche 10a pourrait toutefois recouvrir uniquement une partie de la zone étanche à l'air (couche 10b), par exemple seulement la zone sommet du bandage pneumatique ou s'étendre au moins de la zone sommet jusqu'aux épaules ou jusqu'à mi-flanc (équateur) dudit bandage.

Selon un autre mode de réalisation préférentiel, le stratifié est disposé de telle manière que la première couche (10a) auto-obturante soit radialement la plus interne des deux dans le bandage pneumatique, par rapport à l'autre couche (10b), comme schématisé sur la figure 1 annexée. En d'autres termes, la couche (10a) auto-obturante recouvre la couche (10b) étanche à l'air du côté de la cavité interne 11 du bandage pneumatique 1. Un autre mode de réalisation possible est celui où cette couche (10a) est radialement la plus externe des deux, disposée alors entre la couche étanche (10b) et le reste de la structure du bandage 1.

Dans cet exemple, la couche 10b (d'épaisseur 0,7 à 0,8 mm) est à base de caoutchouc butyl, présente une formulation conventionnelle pour une "gomme intérieure" (*"inner liner"*) qui définit usuellement, dans un bandage pneumatique conventionnel, la face radialement interne dudit bandage. Cette couche 10b étanche à l'air permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 10a est quant à elle constituée d'une composition auto-obturante conforme à l'invention.

A titre d'exemple, des compositions ont été préparées, comprenant les ingrédients présentés dans tableau 1, et un système de vulcanisation tel qu'un mélange de soufre (ou donneur de soufre) et d'accélérateur (et/ou activateur) connu de l'homme de l'art :

**Tableau 1**

| | C-1 | C-2 | C-3 | C-4 |
|---|---|---|---|---|
| NR (1) | 100 | 100 | 50 | 50 |
| BR (2) | 0 | 0 | 50 | 50 |
| Noir de carbone (3) | 1 | 1 | 1 | 0 |
| Craie (4) | 0 | 0 | 0 | 35 |
| Plastifiant liquide (5) | 0 | 15 | 15 | 15 |
| Antioxydant (6) | 2 | 2 | 2 | 2 |

| | | | | |
|---|---|---|---|---|
| (1) Caoutchouc naturel (2) Polybutadiène, 94% de cis 1-4 (3) N772 (4) Carbonate de calcium naturel, marque « Omya BLS » commercialisé par la société Omya (5) Polybutadiène liquide, « Ricon 154 » commercialisé par la société Sartomer (6) N-1,3-diméthylbutyl-N-phénylparaphenylènediamine, « Santoflex 6-PPD » de la société Flexsys) | | | | |

Les compositions C-1 et C-2 sont réalisées à titre de témoins tandis que les compositions C-3 et C-4 sont conformes à l'invention.

La viscosité Mooney ML (1+4) à 100°C des deux élastomères de départ, BR et NR, est respectivement égale à environ 45 et environ 85. Pour chacun des deux élastomères, plus de 80% de l'aire de la distribution des masses molaires (mesurée par SEC) est située au-delà de 100 000 g/mol.

Les compositions auto-obturante ci-dessus ont été préparées selon le mode de préparation décrit précédemment.

La couche 10a, disposée par exemple à la figure 1 entre la couche 10b et la cavité 11 du pneumatique, permet de procurer au pneumatique une protection efficace contre les pertes de pression dues aux perforations accidentelles, en permettant l'obturation automatique de ces perforations.

Si un corps étranger tel qu'un clou traverse la structure de l'objet pneumatique, par exemple une paroi telle qu'un flanc 3 ou le sommet 6 du bandage pneumatique 1, la composition de l'invention servant de couche auto-obturante subit plusieurs contraintes. En réaction à ces contraintes, et grâce à ses propriétés avantageuses de déformabilité et d'élasticité, ladite composition crée une zone de contact étanche tout autour du corps. Peu importe que le contour ou profil de ce dernier soit uniforme ou régulier, la souplesse de la composition auto-obturante permet à cette dernière de s'immiscer dans des ouvertures de taille minime. Cette interaction entre la composition auto-obturante et le corps étranger confère une étanchéité à la zone affectée par ce dernier.

En cas de retrait, accidentel ou volontaire, du corps étranger, une perforation reste : celle-ci est susceptible de créer une fuite plus ou moins importante, en fonction de sa taille. La composition auto-obturante de l'invention, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la composition auto-obturante de l'invention permettait de supporter sans problème les efforts des parois environnantes, même lors des phases de déformations du bandage pneumatique chargé et en roulage.

Le pneumatique pourvu de sa couche anti-crevaison (10a) tel que décrit ci-dessus peut être réalisé avant ou après vulcanisation (ou cuisson).

Dans le premier cas (i.e., avant cuisson du bandage pneumatique), la composition auto-obturante de l'invention est simplement appliquée de façon conventionnelle à l'endroit souhaité, pour formation de la couche 10a. La vulcanisation est ensuite effectuée classiquement.

Une variante de fabrication avantageuse, pour l'homme du métier des bandages pneumatiques, consistera par exemple au cours d'une première étape, à déposer à plat la composition auto-obturante directement sur un tambour de confection, sous la forme d'une couche (*"skim"*) d'épaisseur adaptée (par exemple 2 à 6 mm), avant de recouvrir cette dernière avec la couche étanche à l'air puis le reste de la structure du bandage pneumatique, selon des techniques de fabrication bien connues de l'homme du métier. Ce type de procédé permet en outre de réaliser aisément le second mode de réalisation dans lequel la couche d'étanchéité 10b serait radialement la plus interne.

Dans le second cas (i.e., après cuisson du bandage pneumatique), la composition auto-obturante est appliquée à l'intérieur du bandage pneumatique cuit par tout moyen approprié, par exemple par collage, par pulvérisation ou encore extrusion et soufflage d'un film d'épaisseur appropriée.

Lors d'essais, des pneumatiques de type tourisme, de dimension 205/55 R16 "marque Michelin, Energy Saver" ont été testés à température ambiante (20°C). La paroi interne des pneumatiques (comportant déjà la couche étanche à l'air (10b) a été recouverte par la couche auto-obturante (10a) précédemment décrite, d'une épaisseur de 3 mm, puis les pneumatiques vulcanisés.

Les pneumatiques ont été perforés en six endroits, à travers la bande de roulement et le bloc sommet avec des clous de 5 mm, 4 mm et 3 mm de diamètre. Les pneumatiques ont été soumis à un roulage sur volant par paliers de 100, 110, 120, 130 140 et 150 km/h, sous une charge nominale de 400 kg, pendant 750 km au total, distance au-delà de laquelle le roulage a été stoppé. Suite à ce roulage, une partie des clous a été éjectée, l'autre partie est retirée manuellement. La pression du pneumatique est évaluée et une solution d'eau savonneuse est appliquée localement à l'endroit des perforations pour observer l'échappement potentiel du gaz de gonflage.

Une note de performance moyenne est qualitativement attribuée. Sans composition auto-obturante et dans les mêmes conditions que ci-dessus, le pneumatique ainsi perforé perd sa pression en moins d'une minute, devenant totalement inapte au roulage, correspondant à une note qualitative de 0. Une note de 100 est attribuée au pneumatique témoin 2, muni de la composition auto-obturante C-2, qui ne montre aucune perte de pression à l'intérieur de pneumatique au cours du test, tandis que par application locale d'eau savonneuse à l'endroit de la perforation, on peut observer à la loupe des micros fuites, qui restent difficilement perceptibles.

Par ailleurs, des tests de performance à froid ont confirmé d'excellentes propriétés auto-obturantes de la composition de l'invention à une température de -20°C : des pneumatiques tels que ceux décrits pour les tests d'anticrevaison ci-dessus sont placés au congélateur jusqu'à ce qu'ils atteignent la température souhaitée (-20°C). Huit perforations de 5 mm de diamètre ont été réalisées, à travers la bande de roulement et le bloc sommet, à l'aide de clous qui ont été immédiatement retirés. La perte de gaz de gonflage à froid est évaluée qualitativement par application locale d'eau savonneuse et évaluation du bullage à la surface du pneumatique.

Une note de 0 est attribuée au pneumatique témoin P-0, sans couche auto-obturante, et une note de 100 est attribuée au pneumatique témoin P-2, muni d'une couche auto-obturante témoin (composition C-2).

Les résultats de ces tests qualitatifs sont présentés dans le tableau 2 ci-dessous, les pneumatiques P-1 à P-4 étant respectivement munis des couches auto-obturantes de composition C-1 à C-4 présentées ci-dessus tandis que le pneumatique P-0 n'est muni d'aucune couche auto-obturante :

**Tableau 2**

| | P-0 | P-1 | P-2 | P-3 | P-4 |
|---|---|---|---|---|---|
| Performance anti-crevaison après roulage | 0 | 90 | 100 | 100 | 120 |
| Performance anti-crevaison à -20°C | 0 | * | 100 | 150 | * |

| | | | | | |
|---|---|---|---|---|---|
| * performance non mesurée | | | | | |

On observe de manière inattendue que la performance anti-crevaison à -20°C est très nettement améliorée pour le pneumatique P-3 par rapport au pneumatique témoin P-2, tandis que les pneumatiques munis d'une couche auto-obturante selon l'invention présente une performance anti-crevaison après roulage au moins aussi bonne que les pneumatiques témoins munis d'un couche auto-obturante connue, et même cette performance est notablement améliorée pour le pneumatique P-4.

## Revendications

1. Composition d'élastomère à propriété auto-obturante, utilisable notamment comme couche anti-crevaison dans un objet pneumatique, à base d'au moins, pce signifiant parties en poids pour cent parties d'élastomère solide :
- un coupage d'au moins deux élastomère solides, un élastomère polybutadiène ou copolymère de butadiène, dit "élastomère A", et un élastomère caoutchouc naturel ou polyisoprène de synthèse, dit "élastomère B", le rapport pondéral élastomère A : élastomère B étant compris dans un domaine de 10:90 à 90:10 ;
- entre 30 et 90 pce d'une résine hydrocarbonée ;
- 0 à moins de 100 pce de charge, de préférence 0 à moins de 70 pce de charge, dont 0 à moins de 10 pce de charge renforçante,
dans laquelle la résine hydrocarbonée présente une température de transition vitreuse (Tg) supérieure à 0°C.

2. Composition selon la revendication 1, dans laquelle le rapport pondéral élastomère A : élastomère B est compris dans un domaine de 20:80 à 80:20, de préférence de 30:70 à 70:30.

3. Composition selon l'une quelconque des revendications 1 à 2, dans laquelle le taux de résine hydrocarbonée est compris dans un domaine de 45 à 75 pce.

4. Composition selon l'une quelconque des revendications 1 à 3, dans laquelle la résine hydrocarbonée présente une température de transition vitreuse (Tg) supérieure à +20°C.

5. Composition selon l'une quelconque des revendications 1 à 4, dans laquelle la masse molaire moyenne en nombre Mn de la résine hydrocarbonée est comprise entre 400 et 2 000 g/mol.

6. Composition selon l'une quelconque des revendications 1 à 5, comportant de 0 à 70 pce de charge dont 0 à moins de 5 pce de charge renforçante.

7. Composition selon l'une quelconque des revendications 1 à 6, comportant de 5 à 70 pce de charge autre que renforçante, préférentiellement de 15 à 50 pce.

8. Composition selon l'une quelconque des revendications 1 à 7 dans laquelle la charge autre que renforçante est choisie parmi le groupe constitué par les cendres, les microparticules de carbonates de calcium naturels ou synthétiques, les silicates synthétiques ou naturels, les silices, les oxydes de titane, les alumines, les aluminosilicates et leurs mélanges.

9. Composition selon l'une quelconque des revendications 1 à 8, la charge renforçante étant du noir de carbone.

10. Composition selon la revendication 9, comportant moins de 5 pce, de préférence moins de 2 pce, de noir de carbone.

11. Composition selon l'une quelconque des revendications 1 à 10, comportant en outre un plastifiant liquide dont la température de transition vitreuse (Tg) est inférieure à -20°C.

12. Composition selon la revendication 11, dans laquelle le taux de plastifiant liquide est inférieur ou égal à 60 pce, de préférence de 5 à 60 pce.

13. Composition selon l'une quelconque des revendications 11 ou 12, dans laquelle le plastifiant liquide est choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés.

14. Objet pneumatique pourvu d'une couche anti-crevaison, ladite couche comportant une composition selon l'une quelconque des revendications 1 à 13.

15. Composition d'élastomère à propriété auto-obturante, utilisable notamment comme couche anti-crevaison dans un objet pneumatique, à base d'au moins, pce signifiant parties en poids pour cent parties d'élastomère solide :
- un coupage d'au moins deux élastomère solides, un élastomère polybutadiène ou copolymère de butadiène, dit "élastomère A", et un élastomère caoutchouc naturel ou polyisoprène de synthèse, dit "élastomère B", le rapport pondéral élastomère A : élastomère B étant compris dans un domaine de 10:90 à 90:10 ;
- entre 30 et 90 pce d'une résine hydrocarbonée ;
- de 30 à moins de 120 pce de charge, dont 0 à moins de 30 pce de charge renforçante,
dans laquelle la résine hydrocarbonée présente une température de transition vitreuse (Tg) supérieure à 0°C.

16. Composition selon la revendication 15, dans laquelle le rapport pondéral élastomère A : élastomère B est compris dans un domaine de 20:80 à 80:20, de préférence de 30:70 à 70:30.

17. Composition selon l'une quelconque des revendications 15 à 16, dans laquelle le taux de résine hydrocarbonée est compris dans un domaine de 45 à 75 pce.

18. Composition selon l'une quelconque des revendications 15 à 17, dans laquelle la résine hydrocarbonée présente une température de transition vitreuse (Tg) supérieure à +20°C.

19. Composition selon l'une quelconque des revendications 15 à 18, dans laquelle la masse molaire moyenne en nombre Mn de la résine hydrocarbonée est comprise entre 400 et 2 000 g/mol.

20. Composition selon l'une quelconque des revendications 15 à 19 dans laquelle la charge autre que renforçante est choisie parmi le groupe constitué par les cendres, les microparticules de carbonates de calcium naturels ou synthétiques, les silicates synthétiques ou naturels, les silices, les oxydes de titane, les alumines, les aluminosilicates et leurs mélanges.

21. Composition selon l'une quelconque des revendications 15 à 20, la charge renforçante étant du noir de carbone.

22. Composition selon la revendication 21, comportant moins de 5 pce, de préférence moins de 2 pce, de noir de carbone.

23. Composition selon l'une quelconque des revendications 15 à 22, comportant en outre un plastifiant liquide dont la température de transition vitreuse (Tg) est inférieure à - 20°C.

24. Composition selon la revendication 23, dans laquelle le taux de plastifiant liquide est inférieur ou égal à 60 pce, de préférence de 5 à 60 pce.

25. Composition selon l'une quelconque des revendications 23 ou 24, dans laquelle le plastifiant liquide est choisi dans le groupe constitué par les élastomères liquides, les huiles polyoléfiniques, les huiles naphténiques, les huiles paraffiniques, les huiles DAE, les huiles MES, les huiles TDAE, les huiles minérales, les huiles végétales, les plastifiants éthers, les plastifiants esters, les plastifiants phosphates, les plastifiants sulfonates et les mélanges de ces composés.

26. Objet pneumatique pourvu d'une couche anti-crevaison, ladite couche comportant une composition selon l'une quelconque des revendications 15 à 25.

## Patentansprüche

1. Elastomerzusammensetzung mit Selbstversiegelungseigenschaft, die insbesondere als Anti-Pannen-Schicht in einem pneumatischen Objekt verwendet werden kann, auf Basis von mindestens, wobei phe Gewichtsteile pro hundert Teile festes Elastomer bedeutet:
- einer Mischung von mindestens zwei festen Elastomeren, einem Polybutadien- oder Butadien-Copolymer-Elastomer, das als "Elastomer A" bezeichnet wird, und einem Naturkautschuk- oder synthetischen Polyisopren-Elastomer, das als "Elastomer B" bezeichnet wird, wobei das Gewichtsverhältnis von Elastomer A : Elastomer B in einem Bereich von 10:90 bis 90:10 liegt;
- zwischen 30 und 90 phe eines Kohlenwasserstoffharzes;
- 0 bis weniger als 100 phe Füllstoff, vorzugsweise 0 bis weniger als 70 phe Füllstoff, davon 0 bis weniger als 10 phe verstärkender Füllstoff,
wobei das Kohlenwasserstoffharz eine Glasübergangstemperatur (Tg) von mehr als 0°C aufweist.

2. Zusammensetzung nach Anspruch 1, wobei das Gewichtsverhältnis von Elastomer A : Elastomer B in einem Bereich von 20:80 bis 80:20 und vorzugsweise 30:70 bis 70:30 liegt.

3. Zusammensetzung nach einem der Ansprüche 1 bis 2, wobei der Gehalt an Kohlenwasserstoffharz in einem Bereich von 45 bis 75 phe liegt.

4. Zusammensetzung nach einem der Ansprüche 1 bis 3, wobei das Kohlenwasserstoffharz eine Glasübergangstemperatur (Tg) von mehr als +20°C aufweist.

5. Zusammensetzung nach einem der Ansprüche 1 bis 4, wobei das zahlenmittlere Molekulargewicht Mn des Kohlenwasserstoffharzes zwischen 400 und 2000 g/mol liegt.

6. Zusammensetzung nach einem der Ansprüche 1 bis 5, umfassend 0 bis 70 phe Füllstoff, davon 0 bis weniger als 5 phe verstärkender Füllstoff.

7. Zusammensetzung nach einem der Ansprüche 1 bis 6, umfassend 5 bis 70 phe Füllstoff, der nicht verstärkend ist, vorzugsweise 15 bis 50 phe.

8. Zusammensetzung nach einem der Ansprüche 1 bis 7, wobei der Füllstoff, der nicht verstärkend ist, aus der Gruppe bestehend aus Aschen, Mikroteilchen aus natürlichen oder synthetischen Calciumcarbonaten, synthetischen oder natürlichen Silikaten, Kieselsäuren, Titanoxiden, Aluminiumoxiden, Aluminosilikaten und Mischungen davon ausgewählt ist.

9. Zusammensetzung nach einem der Ansprüche 1 bis 8, wobei es sich bei dem verstärkenden Füllstoff um Ruß handelt.

10. Zusammensetzung nach Anspruch 9, umfassend weniger als 5 phe und vorzugsweise weniger als 2 phe Ruß.

11. Zusammensetzung nach einem der Ansprüche 1 bis 10, die außerdem einen flüssigen Weichmacher mit einer Glasübergangstemperatur (Tg) von weniger als - 20°C umfasst.

12. Zusammensetzung nach Anspruch 11, wobei der Gehalt an flüssigem Weichmacher kleiner gleich 60 phe ist und vorzugsweise 5 bis 60 phe beträgt.

13. Zusammensetzung nach einem der Ansprüche 11 oder 12, wobei der flüssige Weichmacher aus der Gruppe bestehend aus flüssigen Elastomeren, Polyolefinölen, naphthenischen Ölen, Paraffinölen, DAE-Ölen, MES-Ölen, TDAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

14. Pneumatisches Objekt mit einer Anti-Pannen-Schicht, wobei die Schicht eine Zusammensetzung nach einem der Ansprüche 1 bis 13 enthält.

15. Elastomerzusammensetzung mit Selbstversiegelungseigenschaft, die insbesondere als Anti-Pannen-Schicht in einem pneumatischen Objekt verwendet werden kann, auf Basis von mindestens, wobei phe Gewichtsteile pro hundert Teile festes Elastomer bedeutet:
- einer Mischung von mindestens zwei festen Elastomeren, einem Polybutadien- oder Butadien-Copolymer-Elastomer, das als "Elastomer A" bezeichnet wird, und einem Naturkautschuk- oder synthetischen Polyisopren-Elastomer, das als "Elastomer B" bezeichnet wird, wobei das Gewichtsverhältnis von Elastomer A : Elastomer B in einem Bereich von 10:90 bis 90:10 liegt;
- zwischen 30 und 90 phe eines Kohlenwasserstoffharzes;
- 30 bis weniger als 120 phe Füllstoff, davon 0 bis weniger als 30 phe verstärkender Füllstoff,
wobei das Kohlenwasserstoffharz eine Glasübergangstemperatur (Tg) von mehr als 0°C aufweist.

16. Zusammensetzung nach Anspruch 15, wobei das Gewichtsverhältnis von Elastomer A : Elastomer B in einem Bereich von 20:80 bis 80:20 und vorzugsweise 30:70 bis 70:30 liegt.

17. Zusammensetzung nach einem der Ansprüche 15 bis 16, wobei der Gehalt an Kohlenwasserstoffharz in einem Bereich von 45 bis 75 phe liegt.

18. Zusammensetzung nach einem der Ansprüche 15 bis 17, wobei das Kohlenwasserstoffharz eine Glasübergangstemperatur (Tg) von mehr als +20°C aufweist.

19. Zusammensetzung nach einem der Ansprüche 15 bis 18, wobei das zahlenmittlere Molekulargewicht Mn des Kohlenwasserstoffharzes zwischen 400 und 2000 g/mol liegt.

20. Zusammensetzung nach einem der Ansprüche 15 bis 19, wobei der Füllstoff, der nicht verstärkend ist, aus der Gruppe bestehend aus Aschen, Mikroteilchen aus natürlichen oder synthetischen Calciumcarbonaten, synthetischen oder natürlichen Silikaten, Kieselsäuren, Titanoxiden, Aluminiumoxiden, Aluminosilikaten und Mischungen davon ausgewählt ist.

21. Zusammensetzung nach einem der Ansprüche 15 bis 20, wobei es sich bei dem verstärkenden Füllstoff um Ruß handelt.

22. Zusammensetzung nach Anspruch 21, umfassend weniger als 5 phe und vorzugsweise weniger als 2 phe Ruß.

23. Zusammensetzung nach einem der Ansprüche 15 bis 22, die außerdem einen flüssigen Weichmacher mit einer Glasübergangstemperatur (Tg) von weniger als -20°C umfasst.

24. Zusammensetzung nach Anspruch 23, wobei der Gehalt an flüssigem Weichmacher kleiner gleich 60 phe ist und vorzugsweise 5 bis 60 phe beträgt.

25. Zusammensetzung nach einem der Ansprüche 23 oder 24, wobei der flüssige Weichmacher aus der Gruppe bestehend aus flüssigen Elastomeren, Polyolefinölen, naphthenischen Ölen, Paraffinölen, DAE-Ölen, MES-Ölen, TDAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

26. Pneumatisches Objekt mit einer Anti-Pannen-Schicht, wobei die Schicht eine Zusammensetzung nach einem der Ansprüche 15 bis 25 enthält.

## Claims

1. Elastomer composition having a self-sealing property which can be used in particular as puncture-resistant layer in an inflatable article, based on at least (phr meaning parts by weight per 100 parts of solid elastomer):
- a blend of at least two solid elastomers, a polybutadiene or butadiene copolymer elastomer, referred to as "elastomer A", and a natural rubber or synthetic polyisoprene elastomer, referred to as "elastomer B", the elastomer A : elastomer B ratio by weight being within a range from 10:90 to 90:10;
- between 30 and 90 phr of a hydrocarbon resin;
- 0 to less than 100 phr of filler, preferably 0 to less than 70 phr of filler, including 0 to less than 10 phr of reinforcing filler,
wherein the hydrocarbon resin exhibits a glass transition temperature (Tg) greater than 0°C.

2. Composition according to Claim 1, wherein the elastomer A : elastomer B ratio by weight is within a range from 20:80 to 80:20, preferably from 30:70 to 70:30.

3. Composition according to any one of Claims 1 to 2, wherein the content of hydrocarbon resin is within a range from 45 to 75 phr.

4. Composition according to any one of Claims 1 to 3, wherein the hydrocarbon resin exhibits a glass transition temperature (Tg) greater than +20°C.

5. Composition according to any one of Claims 1 to 4, wherein the number-average molar mass Mn of the hydrocarbon resin is between 400 and 2000 g/mol.

6. Composition according to any one of Claims 1 to 5, comprising from 0 to 70 phr of filler, including 0 to less than 5 phr of reinforcing filler.

7. Composition according to any one of Claims 1 to 6, comprising from 5 to 70 phr of filler other than reinforcing filler, preferably from 15 to 50 phr.

8. Composition according to any one of Claims 1 to 7, wherein the filler other than reinforcing is chosen from the group consisting of ashes, microparticles of natural calcium carbonates or synthetic calcium carbonates, synthetic silicates or natural silicates, silicas, titanium oxides, aluminas, aluminosilicates and their mixtures.

9. Composition according to any one of Claims 1 to 8, the reinforcing filler being carbon black.

10. Composition according to Claim 9, comprising less than 5 phr, preferably less than 2 phr, of carbon black.

11. Composition according to any one of Claims 1 to 10, additionally comprising a liquid plasticizer for which the glass transition temperature (Tg) is less than -20°C.

12. Composition according to Claim 11, wherein the content of liquid plasticizer is less than or equal to 60 phr, preferably from 5 to 60 phr.

13. Composition according to Claims 11 or 12, wherein the liquid plasticizer is selected from the group consisting of liquid elastomers, polyolefin oils, naphthenic oils, paraffinic oils, DAE oils, MES oils, TDAE oils, mineral oils, vegetable oils, ether plasticizers, ester plasticizers, phosphate plasticizers, sulphonate plasticizers and the mixtures of these compounds.

14. Inflatable article provided with a puncture-resistant layer, the said layer comprising a composition according to anyone of Claims 1 to 13.

15. Elastomer composition having a self-sealing property which can be used in particular as puncture-resistant layer in an inflatable article, based on at least (phr meaning parts by weight per 100 parts of solid elastomer):
- a blend of at least two solid elastomers, a polybutadiene or butadiene copolymer elastomer, referred to as "elastomer A", and a natural rubber or synthetic polyisoprene elastomer, referred to as "elastomer B", the elastomer A : elastomer B ratio by weight being within a range from 10:90 to 90:10;
- between 30 and 90 phr of a hydrocarbon resin;
- from 30 to less than 120 phr of filler, including 0 to less than 30 phr of reinforcing filler,
wherein the hydrocarbon resin exhibits a glass transition temperature (Tg) greater than 0°C.

16. Composition according to Claim 15, wherein the elastomer A : elastomer B ratio by weight is within a range from 20:80 to 80:20, preferably from 30:70 to 70:30.

17. Composition according to any one of Claims 15 to 16, wherein the content of hydrocarbon resin is within a range from 45 to 75 phr.

18. Composition according to any one of Claims 15 to 17, wherein the hydrocarbon resin exhibits a glass transition temperature (Tg) greater than +20°C.

19. Composition according to any one of Claims 15 to 18, wherein the number-average molar mass Mn of the hydrocarbon resin is between 400 and 2000 g/mol.

20. Composition according to any one of Claims 15 to 19, wherein the filler other than reinforcing is chosen from the group consisting of ashes, microparticles of natural calcium carbonates or synthetic calcium carbonates, synthetic silicates or natural silicates, silicas, titanium oxides, aluminas, aluminosilicates and their mixtures.

21. Composition according to any one of Claims 15 to 20, the reinforcing filler being carbon black.

22. Composition according to Claim 21, comprising less than 5 phr, preferably less than 2 phr, of carbon black.

23. Composition according to any one of Claims 15 to 22, additionally comprising a liquid plasticizer for which the glass transition temperature (Tg) is less than -20°C.

24. Composition according to Claim 23, wherein the content of liquid plasticizer is less than or equal to 60 phr, preferably from 5 to 60 phr.

25. Composition according to Claims 23 or 24, wherein the liquid plasticizer is selected from the group consisting of liquid elastomers, polyolefin oils, naphthenic oils, paraffinic oils, DAE oils, MES oils, TDAE oils, mineral oils, vegetable oils, ether plasticizers, ester plasticizers, phosphate plasticizers, sulphonate plasticizers and the mixtures of these compounds.

26. Inflatable article provided with a puncture-resistant layer, the said layer comprising a composition according to any one of Claims 15 to 25.
